# EUROPEAN PATENT SPECIFICATION

(11) **EP 3 559 605 B1**
(45) Date of publication and mention of the grant of the patent: **07.06.2023**
(21) Application number: 17829021.9
(22) Date of filing: 13.12.2017
(51) Int. Cl.: G01F 1/667

(54) **APPARATUS AND METHOD FOR MEASURING AIR FLOW**
VORRICHTUNG UND VERFAHREN ZUR MESSUNG DES LUFTSTROMS
APPAREIL ET PROCÉDÉ DE MESURE DE DÉBIT D'AIR

(30) Priority: 22.12.2016 FI 20166015
(43) Date of publication of application: 30.10.2019
(73) Proprietor: FläktGroup Sweden AB, 551 84 Jönköping (SE)
(72) Inventor: HOKKANEN, Jari, FI-37800 Akaa (FI); MIKKONEN, Jari, FI-37150 Nokia (FI); SEPPÄLÄINEN, Erkki, FI-02700 Kauniainen (FI); LAGERSTAM, Timo, FI-02210 Espoo (FI); SILLANPÄÄ, Teuvo, FI-00420 Helsinki (FI)
(74) Representative: Kolster Oy Ab
(86) International application number: PCT/IB2017/057866
(87) International publication number: WO 2018/116071

(56) References cited:
- EP-A1- 0 063 095
- US-A- 4 860 593
- US-A1- 2010 095 782
- US-A1- 2016 216 141

## Description

### Field of the invention

The invention relates to an apparatus and to a method for measuring air flow e.g. in a duct of a ventilation system.

### Background of the invention

From the standpoint of the operation of a ventilation system, it is essential that the air flow in the air flow ductwork matches that designed. By examining the directions and velocities of air flows in ventilation ducts, it can be ensured that the system operates in the desired manner. Measuring the directions and velocities of the air flow also enables e.g. various manual or automatic adjustment procedures to be performed in the system.

In prior art, air flow has been measured by the aid of a means installable in, or installed in, a ventilation duct. These types of air flow sensors cause pressure losses in the ventilation duct and also produce noise.

Also known in the art are flow sensors based on ultrasound. Typical of such a prior-art flow sensor is a volume flow rate meter based on measuring the average flow velocity, and its operation is based on measuring the difference in transit time between an ultrasound signal transmitted downstream and upstream. Also disclosed in prior art are so-called hybrid flow meters that operate both on the transit time principle and on the Doppler principle.

Also known in the art are sensors based on the use of ultrasound, in which the flow velocity of the air is determined by means of the transit time difference of the ultrasound signal received at the same moment in time by two ultrasound receivers fitted into connection with the duct.

In solutions known in the art small mechanical inaccuracies, e.g. in installation alignments, or in the exact size or shape of a ventilation duct, cause imprecision in the measuring, e.g. owing to temperature changes as well as a static transit time difference, which must be taken into account in the measurements.

In solutions known in the art, susceptibility to inaccuracy is increased by the fact that the transit time difference can be most precisely verified based on the phase difference of the signals, which increases the periodicity in the interpretation of the measurement results, the periodicity changing as the flow velocity changes.

Previously there are known from US - A - 4860593A and US - A - 20100095782A1 solutions involving calibration of an measurement apparatus. These solutions suggest calculation of an offset value or transit time for subsequent use during correction of measurement values.

### Brief description of the invention

The apparatus according to the invention for measuring air flow is based on the use of ultrasound technology and on the measurement of the transit time difference of ultrasound in a duct, e.g. in a ventilation duct, by means of the phase difference of an ultrasound front. By means of the solution of the invention, the accuracy of a measurement based on ultrasound measurement can be improved and parameters associated with the measurement can be set to be optimal from the viewpoint of the individual properties of a certain duct and measuring location.

It is typical that in the installation work of ventilation ducts, they can be subjected to impacts or loads, which can cause small mechanical changes in the size or roundness of the duct. With automatic optimization of the measuring, these sources of error can be compensated. Other possible causes of the changing of optimal values can be e.g. the manufacturing tolerances of pipes, installation positioning tolerance, and thickness variations in circuit boards or installation parts. Also, with mechanical assemblies, temperature variations cause detectable changes in a measurement result.

In the solution according to the invention, an apparatus for determining air flow in a duct as defined in claim 1 is provided.

In one embodiment of the invention, during calibration the apparatus is adapted to measure the duration of the transmission signal with the ultrasound receivers longer, in which case owing to the periodic behavior of the phase difference the most advantageous point in time, when dispersion of the measurement results is at its smallest, is sought. In such a case, the tolerance for erroneous measurements is at its greatest when the flow velocity changes.

In one embodiment of the invention, the apparatus is adapted to calibrate itself by performing a predetermined measuring series of measurements by changing the predetermined parameters between different measuring instances. After performing a series of measurements, the apparatus is adapted to analyze the measurement results and, based on the analysis of the results, to select the parameters with which the measurement will in future produce acceptable measurement results compared to the correct value for flow velocity. The measurement results can be deemed acceptable e.g. when the value measured by the apparatus deviates after rectifying adjustments from the correct value for flow velocity by at most ± 20 %.

In one embodiment of the invention, the apparatus is adapted to perform calibration when the apparatus or system is started up, initialized, taken into use and/or when the system is serviced. In one embodiment of the invention, the apparatus is adapted to perform calibration at predefined intervals of time.

According to the invention, the apparatus is adapted to perform calibration according to the size of the duct, or of a part thereof, in which case the parameters to be measured and/or the value range, of parameters in a measurement series, to be measured is selected on the basis of the size of the duct, or of a part thereof.

The solution according to the invention has significant advantages compared to prior art. When the apparatus to be used in the measuring is able to independently determine its operating environment, i.e. the signal behavior specific to a certain installation position, the reliability and accuracy of the measuring improve. According to observations, the wrong parameters and set values can result in measuring inoperability and even apparently small changes affect the usability of parameter values associated with transmitting and receiving. When a measuring device seeks the correct parameter values automatically, e.g. in conjunction with initialization of the device, the settings do not need to be made manually or searching for the values does not need work input from a fitter. In such a case, the number of work phases needed in assembling the device is reduced. Likewise, a qualitative improvement is achieved because a user performing a manual search for the optimal parameters always entails the possibility of error. The solution according to the invention also improves servicing situations or exceptional situations. The automatic determination of the measurement parameters can be repeated e.g. after the commissioning installation.

### Brief description of the figures

In the following, the invention will be described in more detail by the aid some embodiments with reference to the drawings 1 - 4, wherein:
Fig. 1 presents the operating principle of an embodiment according to the invention of a flow sensor based on measuring a phase difference;
Fig. 2 presents the structure of an embodiment according to the invention of a flow sensor based on measuring a phase difference,
Fig. 3 presents a schematic view of an embodiment according to the invention of a flow sensor based on measuring a phase difference;
Fig. 4 presents an example of an ultrasound transmitter according to an embodiment of the invention.

### Detailed description of the invention

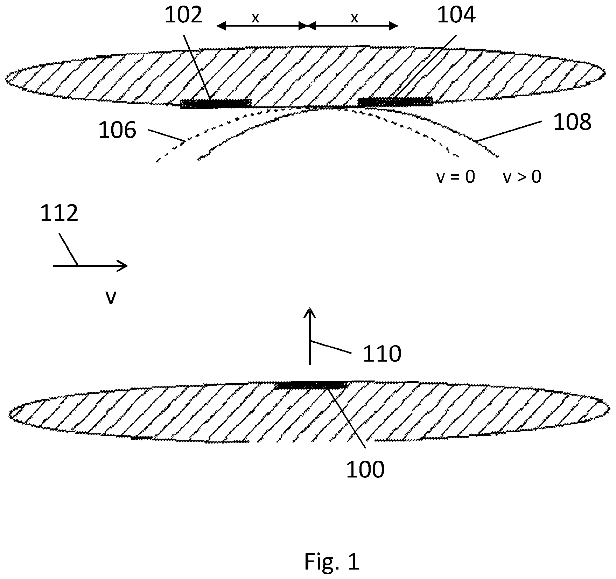

Fig. 1 presents the operating principle of an air flow sensor according to an embodiment of the invention. The apparatus presented in Fig. 1 comprises at least one ultrasound transmitter 100 and at least two ultrasound receivers 102, 104. During operation of the apparatus, the ultrasound transmitter 100 transmits ultrasound and the receivers receive the ultrasound transmitted by the ultrasound transmitter. After this the ultrasound emissions received at the same moment in time are compared to each other and their phase difference is determined.

Fig. 1 also presents the wavefronts 106, 108 of the ultrasound emission 110. If the velocity v of the air flow 112 in the space between the transmitter and the receivers is zero, the wavefront 106 propagates directly from the transmitter towards the receivers, at a right angle to the ventilation duct. If, in this situation, both the receivers 102, 104 are at an equal distance x from the transmitter 100, the ultrasound transmissions received by the receivers 102, 104 do not have a transit time difference. By means of this, the apparatus can determine that the flow velocity v of the air in the space between the ultrasound transmitter 100 and the receivers 102, 104 is zero.

If there is an air flow in the space between the ultrasound transmitter 100 and the ultrasound receivers 102, 104, i.e. the velocity v of the air flow 112 is greater than zero, the wavefront 108 shifts in the direction of the flow. In this case, a change in the transit time difference is detected with the apparatus by comparing the ultrasound emission received at the same moment in time by the receivers 102, 104, and by means of this the direction and velocity v of the air flow in the space between the ultrasound transmitter 100 and the receivers 102, 104 can be determined.

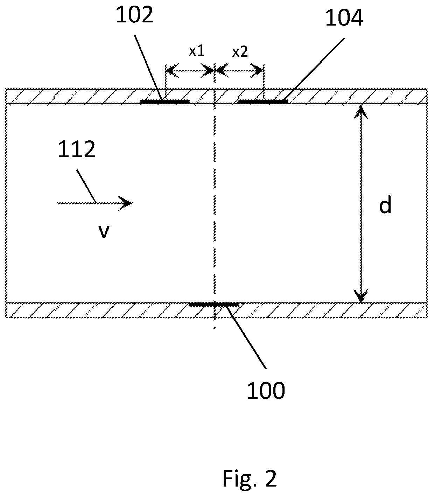

Fig. 2 presents the structure of an air flow sensor according to an embodiment of the invention. The apparatus presented in Fig. 2 comprises a transmitter 100, installed at a right angle to the flow direction, and two or more receivers 102, 104. If the direction 112 of the flow is from left to right, the wavefront arrives at the sensor 104 on the right faster than at the sensor 102 on the left, i.e. the arriving wavefront has a transit time difference and therefore also a phase difference. The phase difference is directly proportional to the average flow velocity v, to the distance (x1 + x2) of the receivers 102, 104 and to the frequency of the ultrasound, but inversely proportional to the speed of sound. A phase shift of 180 degrees can, for example, correspond to an air flow velocity of 30 m/s. In an ideal case, the distances x1 and x2 are of equal lengths, but the distance difference between the distances x1 and x2 can be determined and compensated e.g. by measuring a static phase difference in a situation in which the air flow velocity is zero. In practice, in an installation situation the values x1 and x2 easily deviate from each other although the objective is symmetry.

In one embodiment of the invention, the distances x1 and x2 can be of different magnitudes, in which case when the air is stationary a static phase difference is detected. When the flow velocity of the air increases in the direction of the side on which the distance to the transmitter is greater, the phase difference decreases and receives the value zero, as the flow velocity of the air shifts the wavefront by exactly the amount of the distance difference x1-x2 of the receivers.

In one embodiment of the invention, the distance of the receivers 102, 104 from each other (x1 + x2) is 20 mm - 80 mm. By using the aforementioned distance, a measurement of flow velocity that is as accurate as possible can be ensured with the apparatus according to the invention.

In the measuring method, ultrasound can be generated either continuously or in pulses, depending on the geometry of the pipe. In pulsed running, the phase difference is measured inside the tone burst arriving at the receivers 102, 104. By using pulsed running, the measuring errors caused by reflections of the sound can be eliminated. It is advantageous to read the phase from an even area of the pulse. A second boundary condition can be obtained from the shortest distance of the receivers and the transmitters, from the transit time of the pulse coming via reflections, and from the directional gain of the transmitter. For example, if 60 kHz ultrasound and a transmitter possessing a 10 mm diameter are used, then a suitable pulse length for a round pipe is roughly the diameter d of the pipe divided by the speed of sound. Since the measurement is based on measuring phases, the measurement is independent of amplitude. The strength of the pulse to be transmitted is selected in such a way that a good signal is obtained in the receivers using ordinary preamplification, and the signal-noise ratio is sufficiently high for the needs of further processing.

In both measuring methods, broadband sensors can be advantageously used. With broadband sensors, the phase response is more even than in narrow band sensors based on resonance. In narrow band sensors, the error caused by differences in resonance frequencies and by variations in Q-values is larger. Also rise times are shorter with broadband sensors, which is important if pulsed running is used. On the transmitter side a low Q-value means a faster pulse response. The transmitter should be sufficiently directional, but, however, in such a way that the beam reaches the receivers at all flow velocities. The width of the transmitter beam can be e.g. 20° - 40°, preferably e.g. approx. 30°.

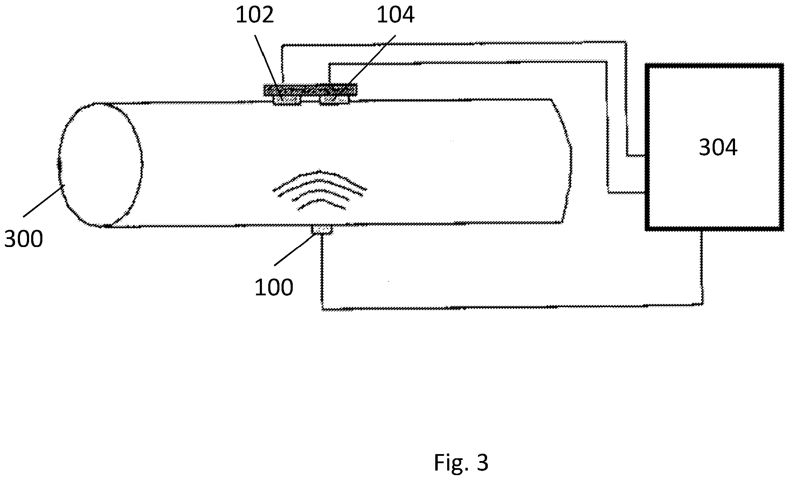

Fig. 3 presents an apparatus according to one embodiment of the invention for measuring air flow. The apparatus comprises one ultrasound transmitter 100 and two receivers 102, 104, which are disposed on opposite sides of a ventilation duct 300. The ultrasound transmitter 100 and the ultrasound receivers 102, 104 are connected to a control unit 304, which comprises measuring electronics, e.g. means for measuring the transit time difference of the signals received by the receivers 102, 104 based on the phase difference. From the phase difference of the signals received by the receivers, the control unit 304 can determine the direction and velocity of the air flow in the ventilation duct. The control unit 304 can also control the ultrasound signal transmitted by the ultrasound transmitter. The control unit 304 can be integrated into a transmitter and/or receiver or it can be a separate unit. If the control unit 304 is a separate unit, the ultrasound transmitter 100 and ultrasound receivers 102, 104 can be connected to the control unit 304 with a wireline or wirelessly. The control unit 304 can also comprise a display device, with which the measurement results can be presented. The control unit 304 can also transmit the measurement results to an external device, e.g. to a flow controller, to a data processing device or to a display device.

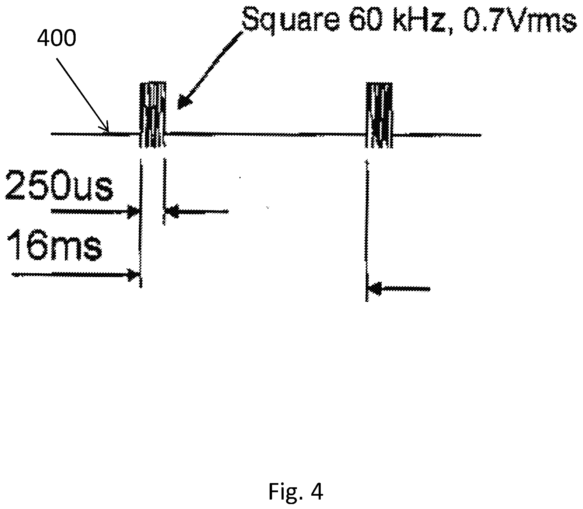

In one embodiment of the invention, microphones, such as MEMS microphones, can be used as the ultrasound receivers. The frequency of the ultrasound transmitter can be e.g. 60 kHz, the operating cycle 60 Hz and the length of one pulse 250 microseconds. An example of the signal format 400 transmitted by the ultrasound transmitter of the embodiment is presented in Fig. 4. Other frequency ratios and pulse ratios also can be used in the solution of the invention and the signal format presented above and in Fig. 4 is only an example.

In the solution according to the invention the transmission, receiving and/or processing of the measuring signal of the air flow meter fastened to the air duct, or to a part of it, e.g. the duration and frequency of the transmission signal as well as the start, length and end of the receiving window, is optimized automatically for each sensor and installation.

In one embodiment of the invention, the need for optimization is based on the fact that the length of the measuring window to be created owing to the phase periodicity in a phase-difference measurement of an ultrasound receiver, with which length reliable measured values are obtained, changes to become shorter without an increase in the flow velocity. As a result, it is advantageous to determine the length of the measuring window to be used in the measuring, at least partly, according to the flow velocity.

Without the optimization according to the solution of the invention, small mechanical inaccuracies, e.g. in installation alignments, or in the exact size or shape of a ventilation duct, can cause imprecision in the measuring. By means of optimization, each ultrasound sensor installed into position can in this way determine for itself the settings and parameters that best improve the signal-noise ratio of the measuring, the repeatability, the measuring reliability and/or the freedom from interference.

In the solution of the invention, a calibration can be performed, by means of which the parameter values of the measurement are set in such a way that the measurement produces the most accurate results possible with a small dispersion. The calibration can be performed e.g. by optimizing the parameters relating to transmitting and/or to receiving ultrasound. The calibration can be performed by making measurements with different parameter values and then by selecting the parameters that produced the most reliable results.

The parameters related to receiving can be optimized e.g. in such a way that in calibration the transmission signal is measured for longer than the duration of the transmission signal and the reception signal received is divided into time ranges, which are analyzed in more detail. From the phase-difference behavior of two receivers, cyclically occurring ranges in which the measurement gives an accurate and repeatable result can be distinguished. The temporal starting point for the receiving time window can, based on this calibration, be set for each sensor for the point detected as optimal in its installation position.

In one embodiment of the invention, the length of the receiving time window, and thus the ending point of the time window, can be optimized in such a way that the dispersion occurring in phase behavior is small with the time window used. If there is frequency variation in a transmission pulse, the length of the time window can be optimized in such a way that sufficiently many wavelengths are obtained in phase identification for a reliable determination of phase difference, but the dispersion caused by a frequency change is still small.

In the solution according to the invention, the transmission signal can be changed by means of calibration, for seeking the optimum e.g. in relation to duration, frequency or strength. The duration of the transmission signal can have an effect e.g. on the frequency of the pulse being transmitted in such a way that the frequency is slightly different at the start, in the middle phases and at the end of the pulse. This can have an effect when comparing the signal measured by two receivers to phase behavior and, via that, to the air flow velocity being determined. In one embodiment, the length of a pulse is less than 30 cycles long.

When the parameters related to measuring have been defined by means of calibration, they can be recorded e.g. in the control unit or in a control device. In one embodiment of the invention, calibration can be performed always when the apparatus or system is started up, initialized, taken into use and/or when the system is serviced. Calibration can also be performed at predefined even intervals so that the measuring functions optimally throughout the service life of the apparatus. In one embodiment of the invention, at least one determined parameter is adjusted automatically based on a measurement result.

According to the present invention, the size of the air duct is measured first, and this information is utilized during calibration in determining and selecting the measuring ranges to be selected for performing measurements. In the invention, means for measuring distance are arranged in connection with the ventilation duct. The size of the duct can be measured in many ways, such as optically, acoustically or mechanically. Preferably the measuring can be performed acoustically, utilizing the arrangement to be used for measuring air flow, i.e. an ultrasound transmitter and an ultrasound receiver or ultrasound receivers, in which case extra components are not needed. In one embodiment of the invention, the means for measuring distance are thus the apparatus for measuring air flow in one of the aforementioned embodiments, which comprises an ultrasound transmitter and at least two ultrasound receivers.

According to the invention, the information determined relating to the size of the air duct is utilized during calibration in selecting the values to be measured and/or the parameters in such a way that the series of measurements does not need to be performed with parameter values suitable for all the different sizes of ventilation duct but instead the values to be used in the series of calibration measurements can be selected from the range in which the optimal measurement values for a ventilation duct of a certain nominal size will be found.

After measuring the size of the duct, such as e.g. the internal diameter, the information relating to the size of the ventilation duct can be recorded, sent and/or set in the apparatus, control unit and/or control unit connectable to the apparatus. The information relating to the size of the ventilation duct can be e.g. the measured size data of the duct, the measured internal diameter of the duct and/or the specified nominal size of the duct based on measurement, which can be utilized in selecting the values to be used in calibration measuring.

By means of the measured size of the air duct, it is possible to set in the system and/or in the control unit information about the nominal size and/or effective size of the air duct, or of a part of said air duct. In one embodiment of the invention, at least one of the aforementioned settings is made automatically based on the automatic size measurement of the air duct or on the size measurement occurring in the initialization of the measuring device.

In one embodiment of the invention, the apparatus is adapted to select and/or to set as the duct size a duct size nearest the measurement result, e.g. a certain nominal size, from a specified list of duct sizes.

In one embodiment of the invention, the apparatus is adapted to perform a measurement of the size of the ventilation duct in conjunction with installation and/or startup of the apparatus and/or e.g. always before calibration.

In one embodiment of the invention, the apparatus is adapted to adjust the power level of the transmission signal used in the measurement of air flow and/or the preamplification gain based on the measured air duct size.

In one embodiment of the invention, the ultrasound receivers do not need to be on the opposite side of the ventilation duct with respect to the ultrasound transmitter, but instead it is also possible that the ultrasound transmitter and one or more ultrasound receivers are on the same side of the ventilation duct. If the ultrasound transmitter and an ultrasound receiver or ultrasound receivers are on the same side of the ventilation duct, a ventilation duct surface is needed on the other side of the sensors, which surface reflects the ultrasounds transmitted by the ultrasound transmitter to the ultrasound receiver or ultrasound receivers. It is advantageous to shape or to treat the surface of the pipe in such a way that sound reflects efficiently back to the receivers.

In one embodiment of the invention, an individual ultrasound sensor can be used both as an ultrasound receiver and as an ultrasound transmitter.

The device according to the invention for measuring air flow can be rigidly installed into connection with a ventilation duct. In one embodiment of the invention, the ultrasound transmitter sensor and the ultrasound receiver sensors are rigidly installed into connection with a ventilation duct, e.g. on the inside surface of the ventilation ductwork. In another embodiment of the invention, the ultrasound transmitter sensor and the ultrasound receiver sensors are rigidly integrated as a part of the pipe in such a way that at least a part of the structure of the sensors is outside the pipe and an aperture corresponding to the transmitter and/or receiver of the sensor is made in the pipe, by means of which aperture the sensor can transmit or receive ultrasound signals that are inside the ventilation duct. The control unit of the apparatus according to the invention can also be integrated into connection with a sensor or sensors, or the apparatus can comprise only connectors with which a separate control unit can be connected to the sensors. An advantage of sensors rigidly installed into parts of ventilation ductwork, e.g. in pipes, is that the parts of the ventilation duct are easily installable into their position, and when installing them there is no need to perform separate adjustment or installation procedures on the air flow sensors.

With the apparatus according to the invention, continuous measurement of the air flow can be performed, or the measuring of air flow can be regulated to occur at certain predefined and/or selectable intervals of time.

The apparatus according to the invention for measuring air flow can be used for measuring the air flow in different parts of a ventilation system, such as e.g. in ducts, regulating boxes, fans, flow controllers, Iris dampers and measurement heads.

## Claims

1. Apparatus for measuring air flow in a duct, e.g. in a ventilation duct (300), wherein
the apparatus comprises a sensor fittable into connection with the duct, the sensor comprising an ultrasound transmitter (100) and at least two ultrasound receivers (102, 104), and a control unit (304) to which the ultrasound transmitter and ultrasound receivers are connectable, and
the control unit is adapted to measure, during the measuring of air flow, the phase difference of an ultrasound signal received at the same moment in time by the at least two ultrasound receivers (102, 104) fitted into connection with the duct and, based on the measured phase difference, to determine the flow velocity and/or flow direction of the air, wherein
the apparatus further comprises means, arranged in connection with the duct, for measuring distance, and the apparatus is adapted to measure the size of the duct, such as the internal diameter of the duct, with the means for measuring distance,
the apparatus is adapted to perform a calibration of the apparatus by transmitting with the ultrasound transmitter (100) at least one calibration signal and by receiving the calibration signal with the at least two ultrasound receivers (102, 104),
the apparatus is adapted to perform calibration according to the size of the duct, or of a part thereof, in which case the values to be measured and/or the parameters to be used in a series of calibration measurements are selected on the basis of the size of the duct, or of a part thereof, and
the apparatus is further adapted to analyze the received calibration signal and, based on the analysis, to select the parameters to be used in measuring to be such that at least one analysis result of the calibration signal meets predetermined criteria with the parameters, wherein the parameters to be selected and to be used in the measuring are the duration of the measuring signal to be sent, the frequency of the measuring signal to be sent, the strength of the measuring signal to be sent, the length of the measuring window of the ultrasound receiver and/or the starting place of the measuring window of the ultrasound receiver.

2. Apparatus according to claim 1, **characterized in that** during calibration the apparatus is adapted to measure the duration of the transmission signal with the ultrasound receiver for longer than the duration of the transmission signal, and to divide the received receiving signal into time ranges, which are analyzed.

3. Apparatus according to any whatsoever of the preceding claims, **characterized in that** the apparatus is adapted to send and/or record the parameters determined by means of calibration to/in the control unit or to/in a controller device.

4. Apparatus according to any whatsoever of the preceding claims, **characterized in that** the apparatus is adapted to perform calibration when the apparatus or system is started up, initialized, taken into use and/or when the system is serviced.

5. Apparatus according to any whatsoever of the preceding claims, **characterized in that** the apparatus is adapted to perform calibration at predefined intervals of time.

6. Apparatus according to claim 1, **characterized in that** the apparatus is adapted to select the size of the duct on the basis of the measured size, e.g. internal diameter, of the duct, or of a part thereof.

7. Apparatus according to any whatsoever of the preceding claims, **characterized in that** the means for measuring distance is a sensor performing a distance measurement optically, a sensor performing a distance measurement acoustically and/or a sensor performing a distance measurement mechanically.

8. Apparatus according to any whatsoever of the preceding claims, **characterized in that** the ultrasound receivers (102, 104) are arranged in connection with the duct in such a way that that the distance from both ultrasound receivers (102, 104) to the ultrasound transmitter (100) is of essentially the same magnitude.

9. Apparatus according to any whatsoever of the preceding claims, **characterized in that** the ultrasound receivers (102, 104) are arranged in connection with the duct in such a way that the distances between the ultrasound receivers (102, 104) and the ultrasound transmitter (100) are of different magnitudes.

10. Method for measuring air flow in a duct, e.g. in a ventilation duct (300), with an apparatus, wherein
the apparatus comprises a sensor fittable into connection with the duct, the sensor comprising an ultrasound transmitter (100) and at least two ultrasound receivers (102, 104), and a control unit (304) to which the ultrasound transmitter and ultrasound receivers are connectable,
wherein the control unit measures, during the measuring of air flow, the phase difference of an ultrasound signal received at the same moment in time by the at least two ultrasound receivers (102, 104) fitted into connection with the duct and, based on the measured phase difference, determines the flow velocity and/or flow direction of the air, wherein
the apparatus further comprises means, arranged in connection with the duct, for measuring distance, and the apparatus measures the size of the duct, such as the internal diameter of the duct, with the means for measuring distance,
the apparatus performs a calibration of the apparatus by transmitting with the ultrasound transmitter (100) at least one calibration signal and by receiving the calibration signal with the at least two ultrasound receivers (102, 104),
the apparatus performs calibration according to the size of the duct, or of a part thereof, in which case the values to be measured and/or the parameters to be used in a series of calibration measurements are selected on the basis of the size of the duct, or of a part thereof, and
the apparatus analyzes the received calibration signal and based on the analysis selects the parameters to be used in measuring to be such that at least one analysis result of the calibration signal meets predetermined criteria with the parameters, wherein the parameters to be selected and to be used in the measuring are the duration of the measuring signal to be sent, the frequency of the measuring signal to be sent, the strength of the measuring signal to be sent, the length of the measuring window of the ultrasound receiver and/or the starting place of the measuring window of the ultrasound receiver.

11. Method according to claim 10, **characterized in that** during calibration the apparatus measures the duration of the transmission signal with the ultrasound receiver for longer than the duration of the transmission signal and divides the receiving signal received into time ranges, which are analyzed.

12. Method according to any whatsoever of the preceding claims 10 - 11, **characterized in that** the apparatus sends and/or records the parameters determined by means of calibration to/in the control unit or to/in a controller device.

13. Method according to any whatsoever of the preceding claims 10 - 12, **characterized in that** the apparatus performs calibration when the apparatus or system is started up, initialized, taken into use and/or when the system is serviced.

14. Method according to any whatsoever of the preceding claims 10 - 13, **characterized in that** the apparatus performs calibration at predefined intervals of time.

15. Method according to claim 10, **characterized in that** the apparatus selects the size of the duct on the basis of the measured size, e.g. internal diameter, of the duct, or of a part thereof.

16. Method according to any whatsoever of the preceding claims 10 - 15, **characterized in that** the means for measuring distance is a sensor performing a distance measurement optically, a sensor performing a distance measurement acoustically and/or a sensor performing a distance measurement mechanically.

17. Method according to any whatsoever of the preceding claims 10 - 16, **characterized in that** the ultrasound receivers (102, 104) are arranged in connection with the duct in such a way that that the distance from both ultrasound receivers (102, 104) to the ultrasound transmitter (100) is of essentially the same magnitude.

18. Method according to any whatsoever of the preceding claims 10 - 17, **characterized in that** the ultrasound receivers (102, 104) are arranged in connection with the duct in such a way that the distances between the ultrasound receivers (102, 104) and the ultrasound transmitter (100) are of different magnitudes.

## Patentansprüche

1. Einrichtung zum Messen eines Luftstroms in einem Kanal, z. B. in einem Lüftungskanal (300), wobei
die Einrichtung einen Sensor umfasst, der in Verbindung mit dem Kanal montierbar ist, wobei der Sensor einen Ultraschallsender (100) und mindestens zwei Ultraschallempfänger (102, 104) und eine Steuereinheit (304), mit der der Ultraschallsender und die Ultraschallempfänger verbindbar sind, umfasst, und
die Steuereinheit angepasst ist, während des Messens des Luftstroms die Phasendifferenz eines Ultraschallsignals zu messen, das im selben Moment der Zeit von den mindestens zwei Ultraschallempfängern (102, 104), die in Verbindung mit dem Kanal montiert sind, empfangen wird, und auf Basis der gemessenen Phasendifferenz die Strömungsgeschwindigkeit und/oder Strömungsrichtung der Luft zu bestimmen, wobei
die Einrichtung ferner ein in Verbindung mit dem Kanal angeordnetes Mittel zum Messen eines Abstands umfasst und die Einrichtung angepasst ist, die Größe des Kanals, wie etwa den Innendurchmesser des Kanals, mit dem Mittel zum Messen eines Abstands zu messen,
die Einrichtung angepasst ist, durch Übertragen von mindestens einem Kalibriersignal mit dem Ultraschallsender (100) und durch Empfangen des Kalibriersignals mit den mindestens zwei Ultraschallempfängern (102, 104) eine Kalibrierung der Einrichtung durchzuführen,
die Einrichtung angepasst ist, eine Kalibrierung gemäß der Größe des Kanals oder eines Teils davon durchzuführen, wobei die in einer Serie von Kalibriermessungen zu messenden Werte und/oder zu verwendenden Parameter auf Basis der Größe des Kanals oder eines Teils davon ausgewählt werden, und
die Einrichtung ferner angepasst ist, das empfangene Kalibriersignal zu analysieren und auf Basis der Analyse die beim Messen zu verwendenden Parameter derart auszuwählen, dass mindestens ein Analyseergebnis des Kalibriersignals vorbestimmte Kriterien mit den Parametern erfüllt, wobei die auszuwählenden und beim Messen zu verwendenden Parameter die Dauer des zu sendenden Messsignals, die Frequenz des zu sendenden Messsignals, die Stärke des zu sendenden Messsignals, die Länge des Messfensters des Ultraschallempfängers und/oder die Anfangsstelle des Messfensters des Ultraschallempfängers sind.

2. Einrichtung nach Anspruch 1, **dadurch gekennzeichnet, dass** die Einrichtung während der Kalibrierung angepasst ist, die Dauer des Übertragungssignals mit dem Ultraschallempfängers länger zu messen als die Dauer des Übertragungssignals und das empfangene Empfangssignal in Zeitbereiche zu teilen, die analysiert werden.

3. Einrichtung nach einem der vorhergehenden Ansprüche, **dadurch gekennzeichnet, dass** die Einrichtung angepasst ist, die mittels der Kalibrierung bestimmten Parameter an die Steuereinheit oder an die Steuervorrichtung zu senden und/oder dieselben in denselben aufzuzeichnen.

4. Einrichtung nach einem der vorhergehenden Ansprüche, **dadurch gekennzeichnet, dass** die Einrichtung angepasst ist, eine Kalibrierung durchzuführen, wenn die Einrichtung oder das System gestartet, initialisiert, in Gebrauch genommen und/oder wenn das System gewartet wird.

5. Einrichtung nach einem der vorhergehenden Ansprüche, **dadurch gekennzeichnet, dass** die Einrichtung angepasst ist, eine Kalibrierung in vordefinierten Zeitintervallen durchzuführen.

6. Einrichtung nach Anspruch 1, **dadurch gekennzeichnet, dass** die Einrichtung angepasst ist, die Größe des Kanals auf Basis der gemessenen Größe, z. B. des Innendurchmessers, des Kanals oder eines Teils davon auszuwählen.

7. Einrichtung nach einem der vorhergehenden Ansprüche, **dadurch gekennzeichnet, dass** das Mittel zum Messen eines Abstands ein Sensor ist, der eine Abstandsmessung optisch durchführt, ein Sensor ist, der eine Abstandsmessung akustisch durchführt, und/oder ein Sensor ist, der eine Abstandsmessung mechanisch durchführt.

8. Einrichtung nach einem der vorhergehenden Ansprüche, **dadurch gekennzeichnet, dass** die Ultraschallempfänger (102, 104) in Verbindung mit dem Kanal derart angeordnet sind, dass der Abstand von beiden Ultraschallempfängern (102, 104) zum Ultraschallsender (100) im Wesentlichen gleich groß ist.

9. Einrichtung nach einem der vorhergehenden Ansprüche, **dadurch gekennzeichnet, dass** die Ultraschallempfänger (102, 104) in Verbindung mit dem Kanal derart angeordnet sind, dass die Abstände zwischen den Ultraschallempfängern (102, 104) und dem Ultraschallsender (100) unterschiedlich groß sind.

10. Verfahren zum Messen eines Luftstroms in einem Kanal, z. B. in einem Lüftungskanal (300), mit einer Einrichtung, wobei
die Einrichtung einen Sensor umfasst, der in Verbindung mit dem Kanal montierbar ist, wobei der Sensor einen Ultraschallsender (100) und mindestens zwei Ultraschallempfänger (102, 104) und eine Steuereinheit (304), mit der der Ultraschallsender und die Ultraschallempfänger verbindbar sind, umfasst,
wobei die Steuereinheit während des Messens des Luftstroms die Phasendifferenz eines Ultraschallsignals misst, das im selben Moment der Zeit von den mindestens zwei Ultraschallempfängern (102, 104), die in Verbindung mit dem Kanal montiert sind, empfangen wird, und auf Basis der gemessenen Phasendifferenz die Strömungsgeschwindigkeit und/oder Strömungsrichtung der Luft bestimmt, wobei
die Einrichtung ferner ein in Verbindung mit dem Kanal angeordnetes Mittel zum Messen eines Abstands umfasst und die die Größe des Kanals, wie etwa den Innendurchmesser des Kanals, mit dem Mittel zum Messen eines Abstands misst,
die Einrichtung durch Übertragen von mindestens einem Kalibriersignal mit dem Ultraschallsender (100) und durch Empfangen des Kalibriersignals mit den mindestens zwei Ultraschallempfängern (102, 104) eine Kalibrierung der Einrichtung durchführt,
die Einrichtung eine Kalibrierung gemäß der Größe des Kanals oder eines Teils davon durchführt, wobei die in einer Serie von Kalibriermessungen zu messenden Werte und/oder zu verwendenden Parameter auf Basis der Größe des Kanals oder eines Teils davon ausgewählt werden, und
die Einrichtung das empfangene Kalibriersignal analysiert und auf Basis der Analyse die beim Messen zu verwendenden Parameter derart auswählt, dass mindestens ein Analyseergebnis des Kalibriersignals vorbestimmte Kriterien mit den Parametern erfüllt, wobei die auszuwählenden und beim Messen zu verwendenden Parameter die Dauer des zu sendenden Messsignals, die Frequenz des zu sendenden Messsignals, die Stärke des zu sendenden Messsignals, die Länge des Messfensters des Ultraschallempfängers und/oder die Anfangsstelle des Messfensters des Ultraschallempfängers sind.

11. Verfahren nach Anspruch 10, **dadurch gekennzeichnet, dass** die Einrichtung während der Kalibrierung die Dauer des Übertragungssignals mit dem Ultraschallempfänger länger misst als die Dauer des Übertragungssignals und das empfangene Empfangssignal in Zeitbereiche teilt, die analysiert werden.

12. Verfahren nach einem der vorhergehenden Ansprüche 10 bis 11, **dadurch gekennzeichnet, dass** die Einrichtung die mittels der Kalibrierung bestimmten Parameter an die Steuereinheit oder an die Steuervorrichtung sendet und/oder dieselben in denselben aufzeichnet.

13. Verfahren nach einem der vorhergehenden Ansprüche 10 bis 12, **dadurch gekennzeichnet, dass** die Einrichtung eine Kalibrierung durchführt, wenn die Einrichtung oder das System gestartet, initialisiert, in Gebrauch genommen und/oder wenn das System gewartet wird.

14. Verfahren nach einem der vorhergehenden Ansprüche 10 bis 13, **dadurch gekennzeichnet, dass** die Einrichtung eine Kalibrierung in vordefinierten Zeitintervallen durchführt.

15. Verfahren nach Anspruch 10, **dadurch gekennzeichnet, dass** die Einrichtung die Größe des Kanals auf Basis der gemessenen Größe, z. B. des Innendurchmessers, des Kanals oder eines Teils davon auswählt.

16. Verfahren nach einem der vorhergehenden Ansprüche 10 bis 15, **dadurch gekennzeichnet, dass** das Mittel zum Messen eines Abstands ein Sensor ist, der eine Abstandsmessung optisch durchführt, ein Sensor ist, der eine Abstandsmessung akustisch durchführt, und/oder ein Sensor ist, der eine Abstandsmessung mechanisch durchführt.

17. Verfahren nach einem der vorhergehenden Ansprüche 10 bis 16, **dadurch gekennzeichnet, dass** die Ultraschallempfänger (102, 104) in Verbindung mit dem Kanal derart angeordnet sind, dass der Abstand von beiden Ultraschallempfängern (102, 104) zum Ultraschallsender (100) im Wesentlichen gleich groß ist.

18. Verfahren nach einem der vorhergehenden Ansprüche 10 bis 17, **dadurch gekennzeichnet, dass** die Ultraschallempfänger (102, 104) in Verbindung mit dem Kanal derart angeordnet sind, dass die Abstände zwischen den Ultraschallempfängern (102, 104) und dem Ultraschallsender (100) unterschiedlich groß sind.

## Revendications

1. Appareil pour la mesure d'un écoulement d'air dans un conduit, par ex. dans un conduit de ventilation (300), dans lequel
l'appareil comprend un capteur apte à être placé en connexion avec le conduit, le capteur comprenant un émetteur d'ultrasons (100) et au moins deux récepteurs d'ultrasons (102, 104), et une unité de commande (304) à laquelle l'émetteur d'ultrasons et les récepteurs d'ultrasons sont aptes à être connectés, et
l'unité de commande est conçue pour mesurer, lors de la mesure d'écoulement d'air, la différence de phase d'un signal ultrasonore reçu au même moment dans le temps par les au moins deux récepteurs d'ultrasons (102, 104) placés en connexion avec le conduit et, sur la base de la différence de phase mesurée, pour déterminer la vitesse d'écoulement et/ou la direction d'écoulement de l'air, dans lequel
l'appareil comprend en outre un moyen, agencé en connexion avec le conduit, de mesure de distance, et l'appareil est conçu pour mesurer la taille du conduit, telle que le diamètre interne du conduit, avec le moyen de mesure de distance,
l'appareil est conçu pour réaliser un étalonnage de l'appareil par l'émission, avec l'émetteur d'ultrasons (100), d'au moins un signal d'étalonnage et par la réception du signal d'étalonnage avec les au moins deux récepteurs d'ultrasons (102, 104),
l'appareil est conçu pour réaliser un étalonnage selon la taille du conduit, ou d'une partie de celui-ci, auquel cas les valeurs devant être mesurées et/ou les paramètres devant être utilisés dans une série de mesures d'étalonnage sont sélectionné (e) s sur la base de la taille du conduit, ou d'une partie de celui-ci, et
l'appareil est en outre conçu pour analyser le signal d'étalonnage reçu et, sur la base de l'analyse, pour sélectionner les paramètres devant être utilisés lors de la mesure afin qu'ils soient tels qu'au moins un résultat d'analyse du signal d'étalonnage satisfasse des critères prédéterminés avec les paramètres, dans lequel les paramètres devant être sélectionnés et devant être utilisés lors de la mesure sont la durée du signal de mesure devant être envoyé, la fréquence du signal de mesure devant être envoyé, l'intensité du signal de mesure devant être envoyé, la longueur de la fenêtre de mesure du récepteur d'ultrasons et/ou l'emplacement de départ de la fenêtre de mesure du récepteur d'ultrasons.

2. Appareil selon la revendication 1, **caractérisé en ce que**, au cours d'un étalonnage, l'appareil est conçu pour mesurer la durée du signal d'émission avec le récepteur d'ultrasons pendant plus longtemps que la durée du signal d'émission, et pour diviser le signal de réception reçu en plages temporelles, qui sont analysées.

3. Appareil selon l'une quelconque des revendications précédentes, **caractérisé en ce que** l'appareil est conçu pour envoyer et/ou enregistrer les paramètres déterminés au moyen d'un étalonnage vers/dans l'unité de commande ou vers/dans un dispositif de commande.

4. Appareil selon l'une quelconque des revendications précédentes, **caractérisé en ce que** l'appareil est conçu pour réaliser un étalonnage lorsque l'appareil ou le système est démarré, initialisé, mis en service et/ou lorsque le système est révisé.

5. Appareil selon l'une quelconque des revendications précédentes, **caractérisé en ce que** l'appareil est conçu pour réaliser un étalonnage à des intervalles de temps prédéfinis.

6. Appareil selon la revendication 1, **caractérisé en ce que** l'appareil est conçu pour sélectionner la taille du conduit sur la base de la taille mesurée, par ex. du diamètre interne, du conduit, ou d'une partie de celui-ci.

7. Appareil selon l'une quelconque des revendications précédentes, **caractérisé en ce que** le moyen de mesure de distance est un capteur réalisant une mesure de distance de manière optique, un capteur réalisant une mesure de distance de manière acoustique et/ou un capteur réalisant une mesure de distance de manière mécanique.

8. Appareil selon l'une quelconque des revendications précédentes, **caractérisé en ce que** les récepteurs d'ultrasons (102, 104) sont agencés en connexion avec le conduit d'une manière telle que la distance des deux récepteurs d'ultrasons (102, 104) à l'émetteur d'ultrasons (100) soit essentiellement du même ordre de grandeur.

9. Appareil selon l'une quelconque des revendications précédentes, **caractérisé en ce que** les récepteurs d'ultrasons (102, 104) sont agencés en connexion avec le conduit d'une manière telle que les distances entre les récepteurs d'ultrasons (102, 104) et l'émetteur d'ultrasons (100) soient d'ordres de grandeur différents.

10. Procédé pour la mesure d'un écoulement d'air dans un conduit, par ex. dans un conduit de ventilation (300), avec un appareil, dans lequel
l'appareil comprend un capteur apte à être placé en connexion avec le conduit, le capteur comprenant un émetteur d'ultrasons (100) et au moins deux récepteurs d'ultrasons (102, 104), et une unité de commande (304) à laquelle l'émetteur d'ultrasons et les récepteurs d'ultrasons sont aptes à être connectés,
dans lequel l'unité de commande mesure, lors de la mesure d'écoulement d'air, la différence de phase d'un signal ultrasonore reçu au même moment dans le temps par les au moins deux récepteurs d'ultrasons (102, 104) placés en connexion avec le conduit et, sur la base de la différence de phase mesurée, détermine la vitesse d'écoulement et/ou la direction d'écoulement de l'air, dans lequel
l'appareil comprend en outre un moyen, agencé en connexion avec le conduit, de mesure de distance, et l'appareil mesure la taille du conduit, telle que le diamètre interne du conduit, avec le moyen de mesure de distance,
l'appareil réalise un étalonnage de l'appareil par l'émission, avec l'émetteur d'ultrasons (100), d'au moins un signal d'étalonnage et par la réception du signal d'étalonnage avec les au moins deux récepteurs d'ultrasons (102, 104),
l'appareil réalise un étalonnage selon la taille du conduit, ou d'une partie de celui-ci, auquel cas les valeurs devant être mesurées et/ou les paramètres devant être utilisés dans une série de mesures d'étalonnage sont sélectionné(e)s sur la base de la taille du conduit, ou d'une partie de celui-ci, et
l'appareil analyse le signal d'étalonnage reçu et, sur la base de l'analyse, sélectionne les paramètres devant être utilisés lors de la mesure afin qu'ils soient tels qu'au moins un résultat d'analyse du signal d'étalonnage satisfasse des critères prédéterminés avec les paramètres, dans lequel les paramètres devant être sélectionnés et devant être utilisés lors de la mesure sont la durée du signal de mesure devant être envoyé, la fréquence du signal de mesure devant être envoyé, l'intensité du signal de mesure devant être envoyé, la longueur de la fenêtre de mesure du récepteur d'ultrasons et/ou l'emplacement de départ de la fenêtre de mesure du récepteur d'ultrasons.

11. Procédé selon la revendication 10, **caractérisé en ce que**, au cours d'un étalonnage, l'appareil mesure la durée du signal d'émission avec le récepteur d'ultrasons pendant plus longtemps que la durée du signal d'émission et divise le signal de réception reçu en plages temporelles, qui sont analysées.

12. Procédé selon l'une quelconque des revendications 10 à 11 précédentes, **caractérisé en ce que** l'appareil envoie et/ou enregistre les paramètres déterminés au moyen d'un étalonnage vers/dans l'unité de commande ou vers/dans un dispositif de commande.

13. Procédé selon l'une quelconque des revendications 10 à 12 précédentes, **caractérisé en ce que** l'appareil réalise un étalonnage lorsque l'appareil ou le système est démarré, initialisé, mis en service et/ou lorsque le système est révisé.

14. Procédé selon l'une quelconque des revendications 10 à 13 précédentes, **caractérisé en ce que** l'appareil réalise un étalonnage à des intervalles de temps prédéfinis.

15. Procédé selon la revendication 10, **caractérisé en ce que** l'appareil sélectionne la taille du conduit sur la base de la taille mesurée, par ex. du diamètre interne, du conduit, ou d'une partie de celui-ci.

16. Procédé selon l'une quelconque des revendications 10 à 15 précédentes, **caractérisé en ce que** le moyen de mesure de distance est un capteur réalisant une mesure de distance de manière optique, un capteur réalisant une mesure de distance de manière acoustique et/ou un capteur réalisant une mesure de distance de manière mécanique.

17. Procédé selon l'une quelconque des revendications 10 à 16 précédentes, **caractérisé en ce que** les récepteurs d'ultrasons (102, 104) sont agencés en connexion avec le conduit d'une manière telle que la distance des deux récepteurs d'ultrasons (102, 104) à l'émetteur d'ultrasons (100) soit essentiellement du même ordre de grandeur.

18. Procédé selon l'une quelconque des revendications 10 à 17 précédentes, **caractérisé en ce que** les récepteurs d'ultrasons (102, 104) sont agencés en connexion avec le conduit d'une manière telle que les distances entre les récepteurs d'ultrasons (102, 104) et l'émetteur d'ultrasons (100) soient d'ordres de grandeur différents.
